# EUROPEAN PATENT APPLICATION

(11) **EP 2 634 482 A2**
(43) Date of publication of application: **04.09.2013**
(21) Application number: 13157518.5
(22) Date of filing: 01.03.2013
(51) Int. Cl.: F22B 1/18

(54) **Method for producing electricity and post combustion capture system**

(30) Priority: 01.03.2012 US 201261605378 P; 27.02.2013 US 201313778437
(71) Applicant: Linde Aktiengesellschaft, 80331 München (DE)
(72) Inventor: Jovanovic, Stevan, North Plainfield, NJ New Jersey 07060 (US); Krishnamurthy, Ramachandran, Chestnut Ridge, NY New York 10977 (US)
(74) Representative: Hofmann, Andreas

(57) **Abstract**

In order to overcome the problems that earlier methods have experienced, a method for generating electricity for use in the production of carbon dioxide (CO₂) is proposed wherein a flue gas from a boiler (A) is a feedstock entering a post combustion capture plant (P) comprising feeding steam generated in said boiler (A) to one or more turbines (B, C, D, K).

## Description

### Technical field of the present invention

The present invention relates to a method for producing electricity for use in a carbon dioxide (CO₂) recovery from fossil fuel based power generation plants, in particular using aqueous solutions of amine-based solvents, such as mono-ethanol amine (MEA), methyldiethanolamine (MDEA), OASE® blue from BASF and KS-1™ solvents from Mitsubishi Heavy Industries (MHI).

The present invention further relates to a corresponding post combustion capture system.

### Technological background of the present invention

In solvent based processes for recovering carbon dioxide from gaseous streams, the carbon dioxide is first absorbed from a gas mixture by contacting the gas mixture with a water solution of amine-based solvent inside an absorber, followed by desorbing the carbon dioxide in a regenerator (also known as stripper) and recirculating the regenerated solvent back to the absorber.

It is known that the absorption process is enhanced by increased pressure and reduced temperature while the regeneration process is favored by reduced pressure and increased solvent temperature.

Increased temperature required for the regeneration within the stripper requires significant amount of thermal energy which is typically provided by a condensation of low pressure saturated steam to heat up a reboiler used for boiling a mixture of carbon dioxide and solvent at the bottom of the stripper.

Significant efforts have been made in discovering new solvents which would require less energy for carbon dioxide absorption and would exhibit higher resistance to oxidative and thermal degradation while allowing for more favorable operating conditions resulting in more energy efficient carbon dioxide recovery processes.

In order to enhance carbon dioxide absorption, process improvements such as using an absorber intercooler to control the temperature rise of the solvent due to the exothermicity of the carbon dioxide absorption process have been proposed and implemented in commercial plants.

Additionally, few recent post combustion capture process configurations such as positioning a flue gas blower downstream from the absorber are aimed to reduce post combustion capture parasitic load and to consequently increase net power generation efficiency.

### Disclosure of the present invention: object, solution, advantages

Starting from the disadvantages and shortcomings as described above and taking the prior art as discussed into account, an object of the present invention is to overcome the problems that earlier methods and systems have experienced.

This object is accomplished by a method comprising the features of claim 1 as well as by a system comprising the features of claim 11. Advantageous embodiments and expedient improvements of the present invention are disclosed in the respective dependent claims.

The present invention basically provides for the integration of power generation and post combustion capture (PCC) plants by means of a method and of a corresponding system for integrating a power plant and a post combustion capture (PCC) plant for producing carbon dioxide.

More particularly, the present invention provides for reducing energy requirements for carbon dioxide capture when an absorption system is utilized for carbon dioxide recovery and its further utilization, compression and/or storage.

The power plant can provide electricity to the post combustion capture plant created by passing steam from a boiler through turbines and feeding the flue gas created by heating the boiler as a feed gas stream to the post combustion capture plant.

A back pressure turbine may be utilized to provide a significant amount of electrical power while extracted steam is being expanded before being introduced into the reboiler present in the post combustion capture plant.

In one embodiment of the present invention there is disclosed a method for generating electricity for use in the production of carbon dioxide wherein a flue gas from a boiler is a feedstock entering a post combustion capture plant comprising feeding steam generated in said boiler to a turbine.

In another embodiment of the present invention there is disclosed a method for producing carbon dioxide from a post combustion capture plant comprising the steps of feeding flue gas to said post combustion capture plant and feeding electricity to said post combustion capture plant.

In a further embodiment of the present invention there is disclosed a post combustion capture system comprising a plant for producing carbon dioxide and a boiler for producing flue gas and steam.

The present invention is a process integration option to coproduce a significant fraction of electrical power for post combustion capture utility power requirements for the production of carbon dioxide.

While the present invention is exemplified by of a power generation with a post combustion carbon dioxide capture (PCC), it can be equally successfully applied to a variety of different power generation process configurations.

In most of the currently existing power plants, the best option for low pressure steam extraction required for the PCC reboiler duty is from the intermediate to low pressure steam crossover point, typically operated at 8 BarA to 12 BarA pressure and 300°C to 400°C temperature.

Since thermal stability of all currently used solvents for carbon dioxide absorption is well below 200°C, it is necessary to de-superheat extracted steam and to reduce its pressure (to 3 BarA to 6 BarA range) before introducing it into the reboiler for solvent reboiling (at temperatures below 160°C) caused by steam condensation.

As a result, required reboiler duty is extracted from power plant under sub-optimal conditions resulting in unnecessary increased in incremental loss of net power efficiency due to PCC capture.

The carbon dioxide that is produced is typically made by a solvent regeneration process.

The steam generated by the boiler is expanded through one or more turbines to produce electricity. These turbines may be selected from the group consisting of high pressure, intermediate pressure and low pressure turbines.

The low pressure steam required for the regeneration of a solvent used in PCC plants allows for the optional utilization of a back pressure turbine fed by the steam extracted from a crossover connecting pipe between intermediate and low pressure turbines, which in turn can produce a significant power for CO₂ capture and compression while conditioning steam to a lower pressure level required by the solvent regeneration.

The steam produced will be partially condensed during the operation of powering the low pressure turbine and further fully condensed within the condenser. The resulting cold condensate is first heated in a series of boiler feed water heaters and then returned to the boiler where it is vaporized to produce a high pressure steam for steam turbine power generation.

For power plants with carbon capture, a significant part of the steam is also fed to a reboiler in the post combustion capture plant to facilitate solvent regeneration and CO₂ coproduction.

The flue gas formed by the boiler can be cleaned prior to entering the post combustion capture plant. Typically the flue gas stream is treated by electrostatic precipitation to remove particles and by flue gas desulfurization unit to remove sulfur compounds present therein.

In the present invention, it is proposed to coproduce significant additional electrical power by expanding extracted steam for the solvent regeneration before introducing it into the PCC reboiler.

A utilization of a back pressure turbine, in particular of a back pressure steam turbine, may be proposed for power cogeneration, which in turn significantly reduces electrical power requirement from the main power plant necessary for the operation of PCC units (such as flue gas blower, solvent circulating pumps etc) and for subsequent carbon dioxide compression when required.

The present invention leads to the following process improvements, particularly for the cases when existing power plant is retrofitted with a newly design carbon dioxide capture plant.

Additionally, the present invention provides for significantly reduced extraction of electrical power generated by the main power plant system for the PCC electrical utility requirements and optional needs for carbon dioxide compression. Increased net power production efficiency is also achieved as well as a reduced cost of electricity for power plants with carbon dioxide capture.

### Brief description of the drawings

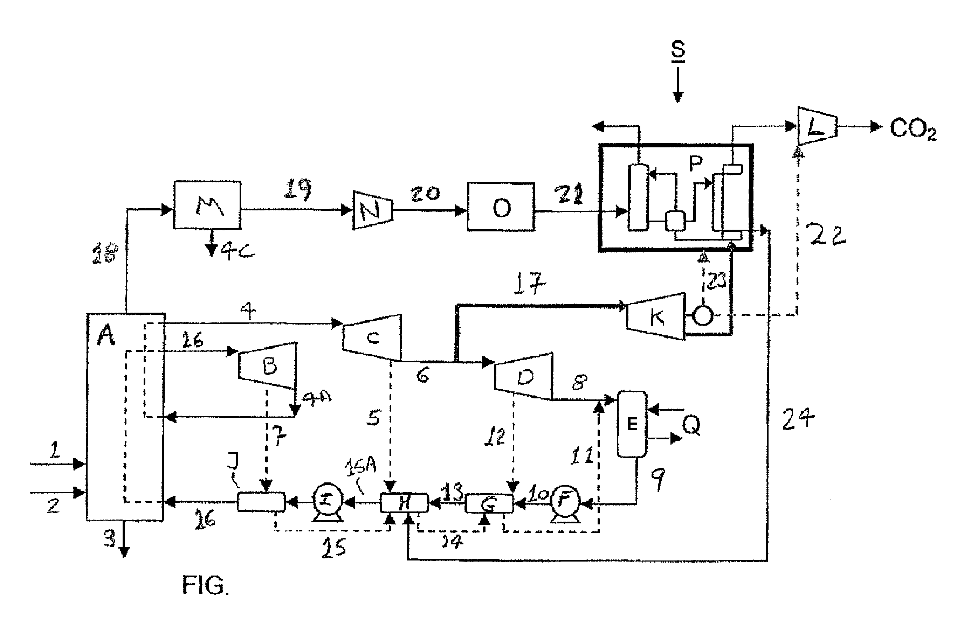

For a more complete understanding of the present inventive embodiment disclosures and as already discussed above, there are several options to embody as well as to improve the teaching of the present invention in an advantageous manner. To this aim, reference may be made to the claims dependent on claim 1 and on claim 11; further improvements, features and advantages of the present invention are explained below in more detail with reference to preferred embodiments by way of non-limiting example and to the appended drawing figure taken in conjunction with the description of the embodiments, of which:
the FIG. is a schematic of a power plant containing a post combustion carbon dioxide capture scheme per the present invention, said power plant being operable in compliance with the method according to the present invention.

### Detailed description of the drawings; best way of embodying the present invention

Turning to the FIG., in a post combustion carbon dioxide (CO₂) capture system S according to the present invention, air and fuel are fed into an industrial boiler A through lines 1 and 2 respectively. The fuel can be any typical hydrocarbon-based or fossil fuels that can combust in the presence of oxygen. Typically the fuel is coal which when burned will also create an ash which can be removed from the boiler A through line 3.

The boiler A will boil high pressure water fed through line 16 to produce high pressure steam. This steam is fed through line 26 to high pressure turbine B. A discharge steam from high pressure turbine B is typically fed back to the boiler A via line 4A.

Reheated intermediate pressure steam is then fed to the intermediate pressure steam turbine C via line 4. Discharge steam from intermediate pressure turbine C, now at a low pressure is fed through line 6 to a low pressure turbine D.

Finally, a discharge steam from low pressure turbine D, typically at subatmospheric pressure, is fed to a condenser E via line 8. Cooling water Q used in the condenser E is typically returned to a water cooling tower, before being recirculated back to the condenser E again.

Condensed subatmospheric pressure steam is withdrawn from the condenser E as a cold water via line 9 and then fed to a water pump F. Pressurized cold water is then fed to a series of boiler feed water heaters G, H and J via corresponding lines 10, 13 and 15, respectively.

Water pump I increases the pressure of water fed to a boiler A via line 16 to a level sufficiently high to produce the required high pressure steam fed through line 16 to the high pressure turbine B.

Multiple steam extraction points existing at high pressure turbine B, intermediate pressure turbine C and low pressure turbine D are used to assist heating of boiler feed water via lines 7, 5 and 12 and related boiler feed water heaters J, H and G, respectively.

A significant fraction of low pressure steam drawn from intermediate pressure turbine C via line 6 is directed toward the reboiler of the stripper in the post combustion capture plant P via line 17. However, since in most of the existing power plants this withdrawn steam is typically at pressures higher than 10 bar, while most of the solvents are thermally sensitive and unstable and consequently require steam for the reboiler typically below 6 BarA, it is proposed to use a back pressure steam turbine K to produce steam below approximately 6 BarA while producing significant amounts of electrical power which can typically cover all of the utility power needs of a post combustion capture plant P via line 22a and can also supply via line 22b a significant fraction of electrical power needed for carbon dioxide compression to supercritical conditions (typically at pressures as high as 150 BarA) when transported through CO₂ pipelines and used for Enhanced Oil Recovery (EOR) or underground sequestration.

Low pressure steam fed to the reboiler via line 23 is condensing to a hot water, while regenerating the solvent by partial vaporization, and is then being directed to boiler feed water heater H.

The flue gas from the burning of the fuel from boiler A is fed through line 18 to an electrostatic precipitator M which will remove fine solids from the flue gas. Ash which is collected is removed through line 4C. The flue gas stream which is reduced in particle content is passed through line 19 to an induced draft (ID) fan N which directs the flue gas stream through line 20 into a flue gas desulfurization unit O where sulfur dioxide is removed.

Depending upon the type of coal burned in the boiler A, there may be considerable amounts of sulfur present in the flue gas stream and it must be removed as a contaminant before being fed through line 21 into the absorber of the PCC plant P.

Absorbed carbon dioxide is transported with solvent to the stripper provided heat to the reboiler enhances the separation of carbon dioxide from solvent and is withdrawn from a condenser at the top of the stripper before further being compressed in a compressor L, further purified if necessary and then transported typically via CO₂ pipelines for final utilization, such as Enhanced Oil Recovery (EOR), for example.

While the present invention has been described with respect to particular embodiments thereof, it is apparent that numerous other forms and modifications of the present invention will be obvious to those skilled in the art. The appended claims in the present invention generally should be construed to cover all such obvious forms and modifications which are within the true spirit and scope of the present invention.

### List of reference numerals

| | |
|---|---|
| 1 | line |
| 2 | line |
| 3 | line |
| 4 | line |
| 4A | line |
| 4C | line |
| 5 | line |
| 6 | line |
| 7 | line |
| 8 | line |
| 9 | line |
| 10 | line |
| 12 | line |
| 13 | line |
| 15 | line |
| 16 | line |
| 17 | line |
| 18 | line |
| 19 | line |
| 20 | line |
| 21 | line |
| 22a | line |
| 22b | line |
| 23 | line |
| 26 | line |
| A | boiler, in particular industrial boiler |
| B | high pressure turbine, in particular high pressure steam turbine |
| C | intermediate pressure turbine, in particular intermediate pressure steam turbine |
| D | low pressure turbine, in particular low pressure steam turbine |
| E | condenser |
| F | water pump |
| G | boiler feed water heater |
| H | boiler feed water heater |
| I | water pump |
| J | boiler feed water heater |
| K | back pressure turbine, in particular back pressure steam turbine |
| L | compressor |
| M | electrostatic precipitator |
| N | induced draft fan or ID fan |
| O | flue gas desulfurization unit |
| P | post combustion capture (PCC) plant, in particular post combustion carbon dioxide capture plant |
| Q | cooling water |
| S | post combustion capture (PCC) system, in particular post combustion carbon dioxide capture system |

## Claims

1. A method for generating electricity for use in the production of carbon dioxide (CO₂) wherein a flue gas from a boiler (A) is a feedstock entering a post combustion capture plant (P) comprising feeding steam generated in said boiler (A) to one or more turbines (B, C, D, K).

2. The method according to claim 1 wherein said carbon dioxide (CO₂) is produced by solvent regeneration.

3. The method according to claim 1 or 2 wherein said steam is expanded through said one or more turbines (B, C, D, K) to produce electricity.

4. The method according to at least one of claims 1 to 3 wherein said one or more turbines (B, C, D) are selected from the group consisting of high pressure turbines (B), intermediate pressure turbines (C) and low pressure turbines (D), in particular of high pressure steam turbines, intermediate pressure steam turbines and low pressure steam turbines.

5. The method according to at least one of claims 1 to 4 wherein said flue gas is treated by gas cleaning means (M, O) prior to entering said post combustion capture plant (P).

6. The method according to claim 5 wherein said cleaning means are selected from the group consisting of electrostatic precipitation (M) and filtering and flue gas desulfurization (O).

7. The method according to at least one of claims 1 to 6 wherein said one or more turbines further comprises a back pressure turbine (K), in particular a back pressure steam turbine.

8. The method according to claim 7 wherein exhaust steam from said one or more turbines (B, C, D) is fed to said back pressure turbine (K).

9. The method according to at least one of claims 1 to 8 wherein said steam is condensed and recycled back to said boiler (A).

10. The method according to at least one of claims 1 to 9 further comprising feeding steam from said one or more turbines (B, C, D, K) to a reboiler in said post combustion capture plant (P).

11. A post combustion capture system (S) comprising a boiler (A) for producing flue gas and steam,
- with said flue gas being a feedstock entering a post combustion capture plant (P) for producing carbon dioxide (CO₂), and
- with said steam being fed to one or more turbines (B, C, D, K).

12. The system according to claim 11 wherein said one or more turbines (B, C, D) are selected from the group consisting of high pressure turbines (B), intermediate pressure turbines (C) and low pressure turbines (D), in particular of high pressure steam turbines, intermediate pressure steam turbines and low pressure steam turbines.

13. The system according to claim 11 or 12 further comprising gas cleaning means (M, O), in particular an electrostatic precipitator (M) and/or a flue gas desulfurization unit (O), for treating said flue gas prior to entering said post combustion capture plant (P).

14. The system according to at least one of claims 11 to 13 wherein exhaust steam from said one or more turbines (B, C, D) is fed to a back pressure turbine (K), in particular to a back pressure steam turbine.

15. The system according to at least one of claims 11 to 14 further comprising a reboiler in said post combustion capture plant (P), said reboiler being feedable with steam from said one or more turbines (B, C, D, K).
